# FASCICULE DE BREVET EUROPEEN

(11) **EP 2 620 329 B1**
(45) Date de publication et mention de la délivrance du brevet: **10.09.2014**
(21) Numéro de dépôt: 13150546.3
(22) Date de dépôt: 08.01.2013
(51) Int. Cl.: B60R 13/08

(54) **Procédé de protection thermique et acoustique d une paroi de structure de véhicule automobile**
Hizte- und Schallschutzverfahren einer Strukturwand eines Kraftfahrzeuges
Method for thermal and sonic shielding of a structural panel of an automobile vehicle

(30) Priorité: 26.01.2012 FR 1250772
(43) Date de publication de la demande: 31.07.2013
(73) Titulaire: CENTRE D'ETUDE ET DE RECHERCHE POUR L'AUTOMOBILE (CERA), 51100 Reims (FR)
(72) Inventeur: Choquart, François, 51100 Reims (FR)
(74) Mandataire: Sayettat, Julien Christian

(56) Documents cités:
- EP-A1- 1 908 638
- WO-A1-2007/134391
- DE-A1-102005 041 707
- FR-A1- 2 941 902
- US-A- 4 462 194
- US-A- 5 897 935
- US-A1- 2009 197 044

## Description

L'invention concerne un procédé de protection thermique et acoustique d'une paroi de structure de véhicule automobile, un panneau mis en oeuvre dans un tel procédé et une architecture comprenant un tel panneau.

Il est connu de réaliser un panneau de protection thermique et acoustique pour véhicule automobile, ledit panneau comprenant une structure porteuse en tôle emboutie, une couche poreuse d'absorption et une couche poreuse de protection, les différents composants dudit panneau étant reliés entre eux notamment par collage. Le document EP 1 908 638 A1 décrit un procédé selon le préambule de la revendication 1 et un panneau selon le preambule de la revendication 9.

Le panneau obtenu, présentant la cohésion attendue entre ses différents composants, peut alors être monté contre une paroi de structure de véhicule automobile afin d'assurer sa fonction de protection acoustique et thermique.

Avec un tel agencement, les différents composants du panneau ne peuvent être que difficilement séparés les uns des autres en fin de vie du véhicule, ce qui rend le recyclage du panneau délicat.

L'invention a pour but de pallier cet inconvénient.

A cet effet, et selon un premier aspect, l'invention propose un procédé de protection thermique et acoustique d'une paroi de structure de véhicule automobile, ledit procédé comprenant les étapes suivantes :
- réaliser une structure porteuse en tôle emboutie,
- disposer sur ladite structure au moins un premier format de couche poreuse d'absorption,
- le recouvrir avec un deuxième format de couche poreuse de protection, de manière à former un patch comprenant lesdits formats superposés,
- former un panneau en maintenant ledit patch sur ladite structure par mise en place d'au moins une fixation en matériau thermoplastique monobloc se présentant sous la forme d'une tige, les extrémités de ladite tige étant pourvues de bâtonnets perpendiculaires à ladite tige et s'étendant de part et d'autre de l'axe de ladite tige, ladite tige traversant lesdits formats et un orifice réalisé dans ladite structure et lesdits bâtonnets assurant le maintien de ladite tige,
- monter le panneau contre la paroi de structure de véhicule automobile, de sorte que ledit patch soit comprimé contre ladite paroi.

Avec l'agencement proposé, on assure au moyen d'au moins une fixation un maintien temporaire des différents composants du panneau entre eux pendant sa phase de montage contre la paroi de structure du véhicule.

Le panneau une fois monté, le patch reste en place du simple fait de sa compression contre la paroi et les fixations, qui n'ont qu'un simple rôle de maintien temporaire pendant le montage, peuvent alors se dégrader sans que cela prête à conséquence.

Qui plus est, le choix de fixations fragiles, se détruisant à mesure de l'utilisation du véhicule, facilite la séparation des différents composants du panneau en fin de vie du véhicule, ce qui est propice au recyclage.

Selon d'autres aspects, l'invention propose un panneau susceptible d'être mis en oeuvre dans un tel procédé et une architecture comprenant un tel panneau.

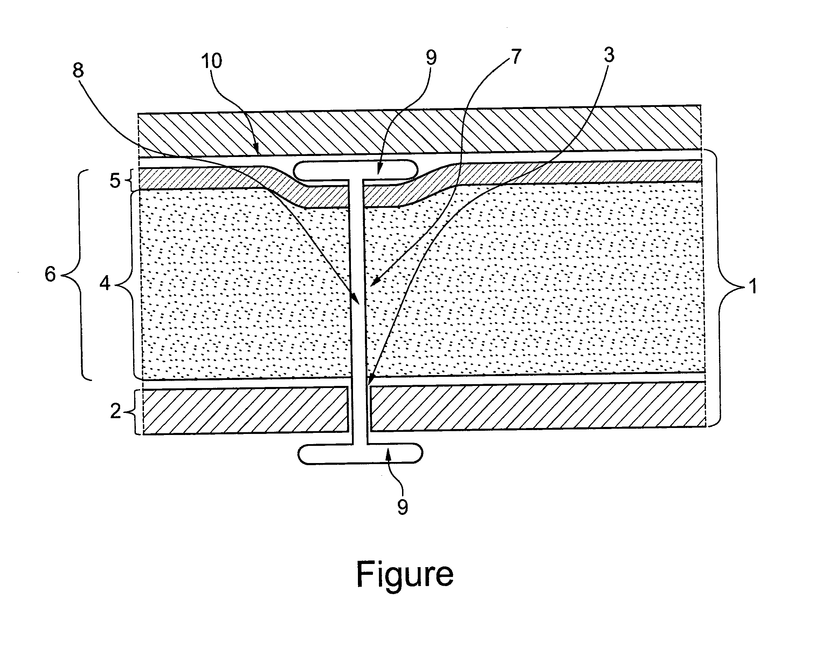

D'autres particularités et avantages de l'invention apparaîtront dans la description qui suit, faite en référence à la figure jointe qui est une vue en coupe schématique partielle d'une architecture selon une réalisation.

En référence à la figure, on décrit un procédé de protection thermique et acoustique d'une paroi 10 de structure de véhicule automobile - notamment d'un tunnel de ligne d'échappement -, ledit procédé comprenant les étapes suivantes :
- réaliser une structure 2 porteuse en tôle emboutie,
- disposer sur ladite structure au moins un premier format 4 de couche poreuse d'absorption,
- le recouvrir avec un deuxième format 5 de couche poreuse de protection, de manière à former un patch 6 comprenant lesdits formats superposés,
- former un panneau 1 en maintenant ledit patch sur ladite structure par mise en place d'au moins une fixation 7 en matériau thermoplastique monobloc se présentant sous la forme d'une tige 8, les extrémités de ladite tige étant pourvues de bâtonnets 9 perpendiculaires à ladite tige et s'étendant de part et d'autre de l'axe de ladite tige, ladite tige traversant lesdits formats et un orifice 3 réalisé dans ladite structure et lesdits bâtonnets assurant le maintien de ladite tige,
- monter le panneau 1 contre la paroi 10 de structure de véhicule automobile, de sorte que ledit patch soit comprimé contre ladite paroi.

De telles fixations 7 sont bien connues, étant notamment utilisées pour l'étiquetage de vêtements.

Elles sont notamment mises en place à l'aide d'un « pistolet » d'utilisation particulièrement ergonomique, ce qui simplifie d'autant le montage du panneau 1.

Un tel pistolet est notamment pourvu d'une aiguille creuse à travers laquelle est projetée la fixation 7.

L'orifice 3 peut être réalisé :
- soit avant la mise en place de la fixation 7,
- soit lors de la mise en place de ladite fixation, ledit orifice étant réalisé par l'aiguille du pistolet, notamment lorsque la structure 2 présente une épaisseur inférieure à 0,5 mm.

Selon une réalisation, la tige 8 présente une section circulaire de diamètre inférieur à 2 mm.

Avec une section aussi faible, la tige 8 en matière plastique se dégrade au cours de la vie du véhicule, ce qui facilite le recyclage en fin de vie.

Selon la réalisation représentée, la longueur de tige 8 est définie de manière à assurer un contact ponctuel serrant entre les formats 4,5.

Selon une réalisation, la couche d'absorption est à base de mousse, notamment à base de mélamine - par exemple de type Basotect TG ® de la société BASF - pouvant résister à des températures élevées.

Selon une réalisation, la couche de protection est à base de non tissé.

Une telle couche de protection permet notamment d'éviter une abrasion de la paroi 10 par la mousse mélamine.

En outre, elle permet de faciliter le montage du panneau 1 sur le véhicule, en favorisant son glissement contre la paroi 10.

Selon une réalisation, la tôle est en aluminium.

Selon une réalisation, la tôle présente une épaisseur comprise entre 0,3 et 0,5 mm.

Une épaisseur de tôle aussi fine est autorisée du fait de la compression du patch 6 contre la paroi, qui améliore la résistance de la structure 2 vis à vis des vibrations, ceci par effet de « couche contrainte ».

On décrit à présent un panneau 1 mis en oeuvre dans un tel procédé, ledit panneau comprenant :
- une structure 2 porteuse en tôle emboutie comprenant au moins un orifice 3 de réception d'une fixation 7,
- au moins un patch 6 comprenant un premier format 4 de couche poreuse d'absorption et un deuxième format 5 de couche poreuse de protection, ledit patch étant disposé de sorte que le premier format 4 soit contre ladite structure, ledit patch étant maintenu à ladite structure par au moins une fixation 7 - et notamment une pluralité de fixations 7 - en matériau thermoplastique monobloc se présentant sous la forme d'une tige 8 dont les extrémités sont pourvues de bâtonnets 9 perpendiculaires à ladite tige et s'étendant de part et d'autre de l'axe de ladite tige, ladite tige traversant lesdits formats et ledit orifice.

On décrit enfin une architecture comprenant un tel panneau 1 et une paroi 10 de structure de véhicule automobile, ledit panneau étant monté contre ladite paroi de sorte que le patch 6 soit comprimé.

## Revendications

1. Procédé de protection thermique et acoustique d'une paroi (10) de structure de véhicule automobile, ledit procédé comprenant les étapes suivantes :
• réaliser une structure (2) porteuse en tôle emboutie,
• disposer sur ladite structure au moins un premier format (4) de couche poreuse d'absorption,
• le recouvrir avec un deuxième format (5) de couche poreuse de protection, de manière à former un patch (6) comprenant lesdits formats superposés,
• former un panneau (1) en maintenant ledit patch sur ladite structure par mise en place d'au moins une fixation (7),
• monter le panneau (1) contre la paroi (10) de structure de véhicule automobile, de sorte que ledit patch soit comprimé contre ladite paroi **caractérisé en ce que** la dite fixation (7) est en matériau thermoplastique monobloc se présentant sous la forme d'une tige (8), les extrémités de ladite tige étant pourvues de bâtonnets (9) perpendiculaires à ladite tige et s'étendant de part et d'autre de l'axe de ladite tige, ladite tige traversant lesdits formats et un orifice (3) réalisé dans ladite structure et lesdits bâtonnets assurant le maintien de ladite tige.

2. Procédé selon la revendication 1, **caractérisé en ce que** la tige (8) présente une section circulaire de diamètre inférieur à 2 mm.

3. Procédé selon la revendication 1 ou 2, **caractérisé en ce que** la longueur de la tige (8) est définie de manière à assurer un contact ponctuel serrant entre les formats (4,5).

4. Procédé selon l'une quelconque des revendications 1 à 3, **caractérisé en ce que** la couche d'absorption est à base de mousse.

5. Procédé selon la revendication 4, **caractérisé en ce que** la mousse est à base de mélamine.

6. Procédé selon l'une quelconque des revendications 1 à 5, **caractérisé en ce que** la couche de protection est à base de non tissé.

7. Procédé selon l'une quelconque des revendications 1 à 6, **caractérisé en ce que** la tôle est en aluminium.

8. Procédé selon la revendication 7, **caractérisé en ce que** la tôle présente une épaisseur comprise entre 0,3 et 0,5 mm.

9. Panneau (1) susceptible d'être mis en oeuvre dans un procédé selon l'une quelconque des revendications 1 à 8, **caractérisé en ce que** ledit panneau comprend :
• une structure (2) porteuse en tôle emboutie comprenant au moins un orifice (3) de réception d'une fixation (7),
• au moins un patch (6) comprenant un premier format (4) de couche poreuse d'absorption et un deuxième format (5) de couche poreuse de protection, ledit patch étant disposé de sorte que le premier formant (4) soit contre ladite structure, ledit patch étant maintenu à ladite structure par au moins une fixation (7), panneau **caracterisé en ce que** la dite fixation (7) est en matériau thermoplastique monobloc se présentant sous la forme d'une tige (8) dont les extrémités sont pourvues de bâtonnets (9) perpendiculaires à ladite tige et s'étendant de part et d'autre de l'axe de ladite tige, ladite tige traversant lesdits formats et ledit orifice.

10. Architecture comprenant un panneau (1) selon la revendication 9 et une paroi (10) de structure de véhicule automobile, ledit panneau étant monté contre ladite paroi de sorte que le patch (6) soit comprimé.

## Patentansprüche

1. Hitze- und Schallschutzverfahren einer Strukturwand (10) eines Kraftfahrzeugs, wobei das Verfahren die folgenden Schritte umfasst:
- Durchführen einer tragenden Struktur (2) aus tiefgezogenem Blech,
- Anordnen auf der Struktur von mindestens einem ersten Schirm (4) aus einer porösen, absorbierenden Schicht,
- Bedecken dieser mit einem zweiten Schirm (5) aus einer porösen Schutzschicht, um einen Platte (6) zu bilden, die die sich überlagernden Schirme umfasst,
- Bilden eines Paneels (1), indem die Platte auf der Struktur durch Anbringen von mindestens einer Befestigung (7) gehalten wird
- Montieren des Paneels (1) gegen die Strukturwand (10) des Kraftfahrzeugs, so dass die Platte gegen die Wand komprimiert ist, **dadurch gekennzeichnet, dass** die Befestigung (7) aus einem einteiligen thermoplastischem Material ist, das die Form eines Schafts (8) aufweist, wobei die Enden des Schafts mit Stäbchen (9) versehen sind, die senkrecht zu dem Schaft sind und sich auf beiden Seiten der Achse des Schafts erstrecken, wobei der Schaft die Schirme und eine Öffnung (3) durchquert, die in der Struktur durchgeführt ist, und die Stäbchen die Aufrechterhaltung des Schafts sicherstellen.

2. Verfahren nach Anspruch 1, **dadurch gekennzeichnet, dass** der Schaft (8) einen kreisförmigen Abschnitt mit einem Durchmesser von weniger als 2 mm aufweist.

3. Verfahren nach Anspruch 1 oder 2, **dadurch gekennzeichnet, dass** die Länge des Schafts (8) definiert ist, um einen punktuellen Presskontakt zwischen den Schirmen (4, 5) sicherzustellen.

4. Verfahren nach einem der Ansprüche 1 bis 3, **dadurch gekennzeichnet, dass** die absorbierende Schicht auf Schaum basiert.

5. Verfahren nach Anspruch 4, **dadurch gekennzeichnet, dass** der Schaum auf Melamin basiert.

6. Verfahren nach einem der Ansprüche 1 bis 5, **dadurch gekennzeichnet, dass** die Schutzschicht auf Vliesstoff basiert.

7. Verfahren nach einem der Ansprüche 1 bis 6, **dadurch gekennzeichnet, dass** das Blech aus Aluminium ist.

8. Verfahren nach Anspruch 7, **dadurch gekennzeichnet, dass** das Blech eine Dichte aufweist, die zwischen 0,3 und 0,5 mm liegt.

9. Paneel (1), das in einem Prozess nach einem der Ansprüche 1 bis 8 durchgeführt werden kann, **dadurch gekennzeichnet, dass** das Paneel Folgendes umfasst:
- eine tragende Struktur (2) aus tiefgezogenem Blech, umfassend mindestens eine Öffnung (3) zur Aufnahme einer Befestigung (7),
- mindestens eine Platte (6), umfassend einen ersten Schirm (4) aus einer porösen Absorptionsschicht und einen zweiten Schirm (5) aus einer porösen Schutzschicht, wobei die Platte derart angeordnet ist, das der erste Schirm (4) gegen die Struktur liegt, wobei die Platte durch mindestens eine Befestigung (7) an der Struktur gehalten wird, wobei das Paneel **dadurch gekennzeichnet ist, dass** die Befestigung (7) aus einem einteiligen thermoplastischem Material ist, das die Form eines Schafts (8) aufweist, dessen Enden mit Stäbchen (9) versehen sind, die senkrecht zu dem Schaft sind und sich auf beiden Seiten der Achse des Schafts erstrecken, wobei der Schaft die Schirme und die Öffnung durchquert.

10. Architektur, umfassend ein Paneel (1) nach Anspruch 9 und eine Strukturwand (10) eines Kraftfahrzeugs, wobei das Paneel derart gegen die Wand montiert ist, dass die Platte (6) komprimiert ist.

## Claims

1. Method for thermal and sonic shielding of a structural wall (10) of an automobile vehicle, said method comprising the following steps:
- creating a supporting structure (2) made of stamped metal sheets,
- arranging on said structure at least one first format (4) of a porous absorption layer,
- covering it with a second format (5) of a porous protective layer, in such a way as to form a patch (6) comprising said superimposed formats,
- forming a panel (1) by maintaining said patch on said structure by the setting up of at least one fastener (7),
- mounting the panel (1) against the structural wall (10) of an automobile vehicle, in such a way that said patch is compressed against said wall, **characterised in that** said fastener (7) is made of a single-piece thermoplastic material that has the form of a rod (8), with the ends of said rod being provided with sticks (9) perpendicular to said rod and extending on either side of the axis of said rod, with said rod passing through said formats and an opening (3) made in said structure and said sticks providing the maintaining of said rod.

2. Method according to claim 1, **characterised in that** the rod (8) has a circular section of diameter less than 2 mm.

3. Method according to claim 1 or 2, **characterised in that** the length of the rod (8) is defined in such a way as to provide a point-contact that tightens between the formats (4, 5).

4. Method according to any of claims 1 to 3, **characterised in that** the absorption layer has a foam base.

5. Method according to claim 4, **characterised in that** the foam has a melamine base.

6. Method according to any of claims 1 to 5, **characterised in that** the protective layer has a nonwoven base.

7. Method according to any of claims 1 to 6, **characterised in that** the sheet metal is made of aluminium.

8. Method according to claim 7, **characterised in that** the sheet metal has a thickness between 0.3 and 0.5 mm.

9. Panel (1) able to be implemented in a method according to any of claims 1 to 8, **characterised in that** said panel comprises:
- a supporting structure (2) made of stamped metal sheets comprising at least one opening (3) for receiving a fastener (7),
- at least one patch (6) comprising a first format (4) of a porous absorption layer and a second format (5) of a porous protective layer, said patch being arranged in such a way that the first formant (4) is against said structure, said patch being maintained to said structure by at least one fastener (7), panel **characterised in that** said fastener (7) is made of a single-piece thermoplastic material having the form of a rod (8) of which the ends are provided with sticks (9) perpendicular to said rod and extending on either side of the axis of said rod, said rod passing through said formats and said opening.

10. Architecture comprising a panel (1) according to claim 9 and a structural wall (10) of an automobile vehicle, with said panel being mounted against said panel in such a way that the patch (6) is compressed.
